# EUROPEAN PATENT SPECIFICATION

(11) **EP 2 665 966 B1**
(45) Date of publication and mention of the grant of the patent: **13.11.2019**
(21) Application number: 12736472.7
(22) Date of filing: 18.01.2012
(51) Int. Cl.: F21V 9/04

(54) **ENHANCED RESPONSE PHOTOCHROMIC COMPOSITION AND DEVICE**
SCHNELL REAGIERENDE PHOTOCHROME ZUSAMMENSETZUNG UND VORRICHTUNG DAMIT
COMPOSITION PHOTOCHROMIQUE À RÉPONSE RENFORCÉE ET DISPOSITIF

(30) Priority: 19.01.2011 US 201161434024 P
(43) Date of publication of application: 27.11.2013
(73) Proprietor: Elbit Systems Ltd., 3100401 Haifa (IS)
(72) Inventor: OFIR, Yuval, 71722 Modiin (IL); CHESKIS, Dima, 44851 Alfe Menashe (IL); DONVAL, Ariela, 48550 Rosh Haayin (IL); DOTAN, Ido, 53304 Givatayim (IL); NEVO, Doron, 43563 Ra'anana (IL); ORON, Moshe, 76404 Rehovot (IL)
(74) Representative: Pearl Cohen Zedek Latzer Baratz UK LLP
(86) International application number: PCT/IB2012/050250
(87) International publication number: WO 2012/098511

(56) References cited:
- WO-A1-2009/156816
- US-A1- 2005 104 408
- US-A1- 2007 133 105
- US-A1- 2010 261 263
- US-A1- 2010 310 900
- ZHIGUO ZHOU ET AL: "Up-conversion luminescent switch based on photochromic diarylethene and rare-earth nanophosphors", CHEMICAL COMMUNICATIONS - CHEMCOM., no. 39, 12 August 2008 (2008-08-12), page 4786, XP055410850, ISSN: 1359-7345, DOI: 10.1039/b809021a
- RAZ GVISHI ET AL: "Resonance energy transfer in a novel two-component system: two-photon fluorophore and a photo-chromic acceptor molecule", PROCEEDINGS VOLUME 9025IS&T/SPIE ELECTRONIC IMAGING | 2-6 FEBRUARY 2014INTELLIGENT ROBOTS AND COMPUTER VISION XXXI: ALGORITHMS AND TECHNIQUES, vol. 5724, 4 April 2005 (2005-04-04), page 13, XP055411394, US ISSN: 0277-786X, DOI: 10.1117/12.588695 ISBN: 978-1-5106-1354-6
- BO ZHOU ET AL: "Controlling upconversion nanocrystals for emerging applications", NATURE NANOTECHNOLOGY, vol. 10, no. 11, 4 November 2015 (2015-11-04), pages 924-936, XP055411391, GB ISSN: 1748-3387, DOI: 10.1038/nnano.2015.251

## Description

### CROSS-REFERENCE TO RELATED APPLICATIONS

This application claims the benefit of, and priority to, U.S. Provisional Patent Application No. 61/424,024, filed January 19, 2011.

### FIELD OF THE INVENTION

The present invention relates to optical power-limiting devices, and more particularly, to an optical power-limiting passive device and to a method for limiting optical power transmission in lenses and windows, using absorption changes in a novel photochromic composition, having response to infrared light in addition to the conventional response to ultraviolet light.

### BACKGROUND OF THE INVENTION

Photochromic materials are known and exhibit a change in light transmission or color in response to actinic radiation in the spectrum of sunlight. Removal of the incident radiation causes these materials to revert back to their original transmissive state.

Such photochromic materials have applications such as sunglasses, graphics, ophthalmic lenses, solar control window films, security and authenticity labels, and many others. The use of photochromic materials, however, has been very limited due to (a) degradation of the photochromic property of the materials due to continued exposure, absorption and heating of UV light, particularly short wavelength (<400 nanometers nm), (b) the long rise and decay times of the darkening (up to minutes), (c) the lack of photochromic reaction in the absence of UV radiation, e.g., the inability to use photochromic glasses behind the front window of a car.

Ophthalmic lenses made of mineral glass are well known. Photochromic pigments have good compatibility with mineral glass. However, photochromic mineral glass lenses are heavy and have a slow photochromic reaction time, particularly in the change from dark to transparent.

Today, most spectacle lenses are made of a variety of plastics or plastic-glass composites. Most used plastics include PMMA (e.g., Plexiglas by Rohm and Haas, Perspex, Lucite, Altuglas and Optiks by Plaskolite,) and polycarbonate (e.g., Lexan by General Electric, MERLON by Mobay Chemical Company, MAKROLON by Bayer, and PANLITE from Teijin Chemical Limited).

Some success in rendering plastic ophthalmic lenses photochromic involved embedding a solid layer of photochromic mineral glass within the bulk of an organic lens material. Examples include U.S. Pat. No. 5,232,637 (Dasher, et al.) that teaches a method of producing a glass-plastic laminated ophthalmic lens structure, and U.S. Pat. No. 4,300,821 (Mignen et al.) that teaches an ophthalmic lens made of organic material having at least one layer of photochromic mineral glass within its mass to impart photochromic properties to the lens.

All known photochromic materials exhibit a change in light transmission or color in response to actinic radiation, mainly due to the UV light in the spectrum of sunlight. There are many circumstances where no UV light exists, e.g., behind windows that absorb the UV. Most of the glasses and ophthalmic polymers are transparent in the visible and near-IR ranges. One embodiment of this invention uses the penetrating near-IR light by up-converting it to the UV and short visible wavelengths and applying the UV to the photochromic material, thus producing a change in light transmission and/or color in response to IR radiation in the spectrum of sunlight or other light sources. Removal of the incident IR radiation causes these materials to revert back to their original transmissive state.

Upconversion (UC) refers to nonlinear optical processes characterized by the successive absorption of two or more pump photons via intermediate long-lived energy states followed by the emission of the output radiation at a shorter wavelength than the pump wavelength. This general concept was first recognized and formulated independently by Auzel, Ovsyankin, and Feofilov in the mid-1960s. (See, e.g., F. Auzel, Chem. Rev., 2004, 104, 139.) Since then, conversion of infrared radiation into the visible range has generated much of the interest in UC research. The knowledge gained thus far has allowed the development of effective optical devices such as infrared quantum counter detectors, temperature sensors, and compact solid state lasers.

U.S. Patent Publication No. US20070133105A1 discloses a photochromic/vitroceramic window assembly comprising: a) A transparent window pane; b) a first self-adhesive material adhered to the exterior of the window pane, of a transparent plastic film containing a UV-activated photochromic dye; and c) a second self-adhesive material adhered to the interior of the window pane, of a transparent plastic film containing i) a rare earth doped vitroceramic that up-converts any infrared not blocked by the first self-adhesive film to a warm visible blue or green color, and ii) a diarylethene that converts any UV not blocked by the first self-adhesive film to a visible yellow-white color.

Zhou et al., 2008 "Up-Conversion luminescent switch based on photochromic diarylethene and rare-earth nanophosphor", Cem. Commun., Pages 4786-4788, discloses a route to a luminescent switch with nondestructive readout capability by utilizing photochromic diarylethene and up-conversion LaF₃: Yb, Ho nanophosphors.

### SUMMARY OF THE INVENTION

Despite the remarkable potential utility of UC materials, the practical uses of UC materials have been extremely limited. The limitations are largely attributed to the difficulties in preparing small nano-crystals (sub-50 nm, much smaller than the visible light wavelength) that exhibit strong UC. This limitation no longer exists today, and efficient UC materials can be incorporated in photochromic devices.

Nanoscale manipulation, e.g., of lanthanide-doped UC nano-crystals, leads to important modification of their optical properties in excited-state dynamics, emission profiles and UC efficiency. For example, the reduction in particle size provides the ability to modify the lifetime of intermediate states. The control of spatial confinement of dopant ions within a nano-scopic region can lead to marked enhancement of a particular wavelength emission as well as generation of new types of emissions. (See e.g. J. W. Stouwdam and F. C. J. M. van Veggel, Nano Lett., 2002, 2, 733).

In many applications there is insufficient UV and short wave visible light radiation to actuate the photochromic material. The addition of UC materials enables the insitu generation of UV and/or short wave visible light that in turn can trigger photochromic materials and devices in these applications. This additional response features enable the use of the photochromic composition in places where ultraviolet (UV) light and short-wave visible light is absent, or obscured, e.g., using photochromic glasses behind the front window of a car.

The present disclosure further concerns, but is not limited to, the production of windows, lenses, contact lenses, microlenses, mirrors and other optical articles. The present disclosure further relates to protecting dedicated optical elements against sun blinding, flash blinding, flash dazzling, flashing lights originating from explosions in battle fields, welding light, fire related blinding, and lenses for cameras that look directly at the sun or missile launching, and other bright emitting sources that contain visible light and infrared (IR) radiation in their spectrum.

The present disclosure further concerns uses of the limiter for power regulation in networks, in the input or at the output from components. Further uses are in the areas of medical, military and industrial lasers where an optical power limiter may be used for surge protection and safety applications.

One embodiment uses a matrix, a photochromic dye and light up-converting nanoparticle additives to provide a photochromic composition that reacts (tints) with or without application of UV or short wave visible light. In this composition, the up-converting nanoparticles absorb low energy photons, e.g., visible light and near-IR light, which is re-emitted into the system as UV or short wave visible light. The re-emitted UV light activates the photochromic material in the composition, even if no UV is arriving from an outside source.

Another embodiment provides a composition of a matrix, a photochromic dye, light up-converting nanoparticle additives, and fluorescence enhancer materials and structures, that enhance fluorescent emission from the up-converting nanoparticle additives. The enhancement of fluorescence from the up-converting nanoparticles is achieved through plasmonic coupling, also known as hot-spots or local field effect.

A further embodiment provides a composition of a matrix, a photochromic dye, light up-converting nanoparticle additives, fluorescence enhancer materials and structures, and environmental stabilizers.

The matrix in the photochromic compositions can be organic-based, e.g., a polymer film, a polymerizable composition, or a transparent adhesive, or inorganic-based, e.g., mineral glass, sol-gel, and any other window based material, and an inorganic-organic composite.

Specific embodiments utilize various UC nanoparticles in the photochromic compositions, such as LaF₃, NaYF₄, LuPO₄, YbPO₄, GdOF, La₂(MoO₄)₃, YVO₄, ZrO₂, TiO₂, BaTiO₃, Lu₃Ga₅O₁₂, Gd₂O₃ or La₂O₂S, where the doping ions include lanthanides such as Yb, Er, Tm, Eu, Nd or Ho.

Various photochromic materials that can be used in the photochromic compositions include, but are not limited to, organic and inorganic photochromics and mixtures thereof. Organic photochromic dyes can be pyrans, oxazines, fulgides, fulgimides, diarylethenes and mixtures thereof. These may be a single photochromic compound, a mixture of photochromic compounds, a material comprising a photochromic compound, such as a monomeric or polymeric ungelled solution; and a material such as a monomer or polymer to which a photochromic compound is chemically bonded. Inorganic photochromics can be crystallites of silver halides, cadmium halide and/or copper halide.

Various fluorescence enhancing materials can be used in the photochromic compositions to enhance fluorescence emission from the up-converting nanoparticles. The enhancement of fluorescence from the up-converting nanoparticles is achieved through plasmonic coupling, also known as hot-spots or local field effect. Examples include, but are not limited to, metallic plasmonic nanostructures such as spiked nanoparticles, hollow-shell nanoparticles, rice-like nanoparticles, nonconcentric-nanoshell nanoparticles, crescent-moon-structured nanoparticles, nanoshells composed of a dielectric core with alternating layers of metal, dielectric, and metal "nanomatryushka," (*e.g*., concentric nanoshells).

Various stabilizers that can be used in the photochromic compositions include hindered amine light stabilizer (HALS), UV absorbers, thermal stabilizers, singlet oxygen quenchers, and various antioxidants. The various stabilizers generally inhibit radiation-induced degradation reactions from occurring in polymeric materials, and thereby extend the useful life of the matrix material hosting the photochromic and up-converting materials.

Various thermal conductivity enhancers used to enhance the thermal conductivity of the matrix used for the photochromic compositions effectively achieve two purposes. One, heat that builds up in the optical element during the absorption of light can dissipate more easily to other elements in the system, effectively reducing the thermal degradation of both the matrix and the photochromic dye. Second, since most photochromic dyes are converted from their colored form (tinted form) to colorless form by the absorption of visible light and by heat, removing the heat element will change the equilibrium of colored and colorless molecules.

In one specific embodiment, the thermal conductivity of polymeric matrixes is achieved by the addition of nanoparticles, nanorods, nanowires, hollow nanoparticles, core-shell nanoparticles, spiked particles, and nanoparticles with various shapes. These may include nanoparticles of metal, metal oxide, metal nitrides, metal carbides, metal sulfides, and carbon-based nanomaterials, such as nanodiamond, diamond-like carbon (DLC), single-wall carbon nanotubes, double-wall carbon nanotubes, multiwall carbon nanotubes, and their functionalized forms, graphene, and carbon steel. The various compositions can be polymerized, cured or fabricated in the form of nanoparticles and/or microparticles. The nanoparticles and/or the microparticles can be further dispersed in a new matrix, appropriate for forming a window, a lens, glasses, a contact lens, a filter, a microlens array or mirrors.

Various nanoparticles and/or microparticles of the photochromic compositions can be further coated or encapsulated with a coating. The coating can serve a number of functions, such as protection of the core composition from oxidation or any form of degradation, blocking out harmful radiation, and changing the chemical nature of the particles (hydrophobic/hydrophilic) and hence the dispersability of the nanoparticles and/or microparticles. The coating can further be a UV-reflecting layer or multilayer that effectively traps the UV light emitted from the up-converting nanoparticles, effectively enhancing the absorption of the photochromic dye inside the nanoparticles and/or microparticles. The coating can be organic, inorganic or a composite, and in the form of a monolayer, a multilayer or a porous layer.

### BRIEF DESCRIPTION OF THE DRAWINGS

The invention will now be described in connection with certain preferred embodiments with reference to the following illustrative figures so that it may be more fully understood. With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention.
FIG. 1 depicts a cross-sectional view of a photochromic and up-conversion bulk material.
FIG. 2 depicts a cross-sectional view of device composed of a photochromic and an up-conversion bulk with a UV reflector/blocker layer.
FIG. 3 depicts a cross-sectional view of device composed of a photochromic and an up-conversion bulk with two UV reflector/blocker layers, on both the entrance and exit sides.
FIG. 4 depicts a cross-sectional view of a photochromic and up-conversion laminated device with a UV reflector on both the entrance and exit sides.
FIG. 5 depicts a cross-sectional view of photochromic and up-conversion particles.
FIG. 6 depicts a cross-sectional view of photochromic and up-conversion particles coated with a UV reflecting layer.
FIG. 7 depicts a cross-sectional view of the photochromic devices of FIGs. 3 and 6 and the light path directions inside the devices.
FIG. 8 depicts a cross-sectional view of photochromic and up-conversion particles in bulk volumes.
FIG. 9 shows a laboratory test set-up for testing and photochromic and up-conversion particles in bulk volumes.
FIG. 10 shows experimental results of photochromic and up-conversion particles in bulk volumes.

### DETAILED DESCRIPTION OF THE DRAWINGS

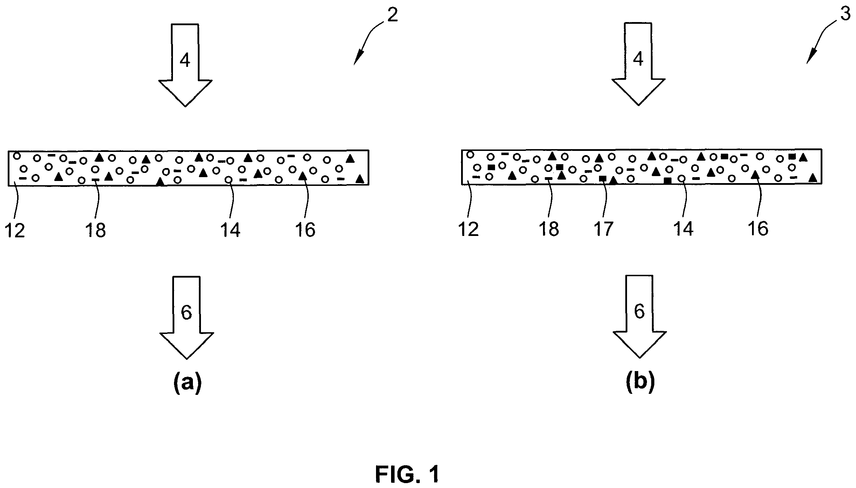

FIG. 1 is a cross-sectional view of a photochromic and up-conversion bulk material in two versions:

FIG. 1a depicts a cross-sectional view of a photochromic and up-conversion bulk material 2, comprising a matrix 12, a photochromic material 14, up-conversion nanoparticles additive 16 and environmental stabilizers 18. The optical element absorbs part of the light beam 4 which impinges on it, the UV part is absorbed in the photochromic material 14, and the visible and/or near-IR part is absorbed by the up-conversion nanoparticles additive 16 and up-converted to UV light, that when absorbed by the photochromic material 14 changes the bulk color and transparency, and effectively transmits only part of the light 6. When the power of the entering light 4 is reduced, the transparency is resumed, and the exiting light beam 6 is about as intense as the entering light 4. The material 2 changes the bulk color and transparency when exposed to UV light and/or visible light and/or near-IR light separately or all together.

FIG. 1b depicts a cross-sectional view of a photochromic and up-conversion bulk material 3, comprising a matrix 12, a photochromic material 14, up-conversion nanoparticles additive 16, fluorescence enhancers 17 and environmental stabilizers 18. The optical element absorbs part of the light beam 4 which impinges on it, the UV part is absorbed in the photochromic material 14, and the visible and/or near-IR part is absorbed by the up-conversion nanoparticles additive 16 and up-converted to UV light, that when absorbed by the photochromic material 14 changes the bulk color and transparency, and effectively transmits only part of the light 6. Fluorescence enhancers 17 enhance fluorescent emission from the up-converting nanoparticles additives 16. The enhancement of fluorescence from the up-converting nanoparticles 16 is achieved through plasmonic coupling, also known as hot-spots or local field effect. When the power of the entering light 4 is reduced, the transparency is resumed, and the exiting light beam 6 is about as intense as the entering light 4. The material 3 changes the bulk color and transparency when exposed to UV and/or visible and/or near IR separately or all together.

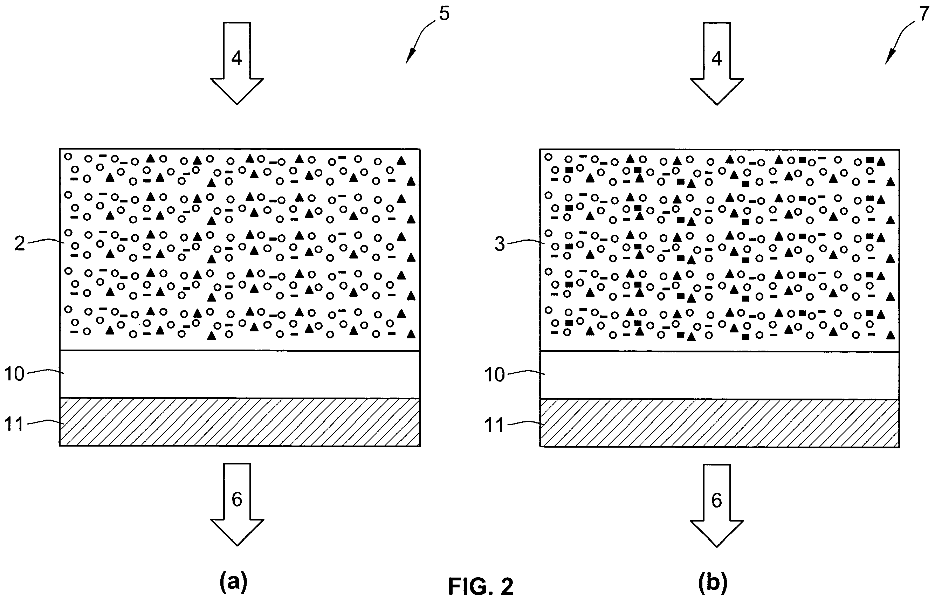

FIG. 2 shows a cross-sectional view of a photochromic up-conversion optical device in two versions equipped with a UV reflector layer and a UV blocker layer:

FIG. 2a shows a cross-sectional view of a photochromic up-conversion bulk material 5, comprising a composition 2 (as described above in connection with FIG. 1a), a UV reflector layer 10, and a UV blocker layer 11. The optical element 5 absorbs part of the light beam 4 which impinges on it, the UV part is absorbed in the photochromic material 14, and the visible and/or near-IR part is absorbed by the up-conversion nanoparticles additive 16 and up-converted to UV light, that when absorbed by photochromic material 14 changes the bulk color and transparency, and effectively transmits only part of the light 6. When the power of the entering light 4 is reduced, the transparency is resumed, and the exiting light beam 6 is about as intense as the entering light 4. The material 2 changes the bulk color and transparency when exposed to UV light and/or visible and/or near-IR light separately or all together. At the light exit, the UV reflector 10, which is transparent in the visible and near-IR range, serves two purposes: (a) reflecting the remaining UV light that was not absorbed into the material 2, thus enhancing efficiency, and (b) filtering the UV light from the exiting light 6, thus shielding, e.g., the eye, from UV radiation when the material is used for spectacle lenses. The UV blocker layer 11 absorbs UV light to further prevent the escape of any UV in the exiting light 6.

FIG. 2b is a cross-sectional view of a photochromic up-conversion optical device 7, comprising a composition 3 (as described above in connection with FIG. 1b), a UV reflector layer 10, and a UV blocker layer 11. The optical element 7 performs in the same way as the optical element 5 described above and, in addition, has fluorescence enhancers 17 that enhance fluorescent emission from the up-converting nanoparticles additive 16. The enhancement of fluorescence from the up-converting nanoparticles 16 is achieved through plasmonic coupling, also known as hot-spots or local field effect.

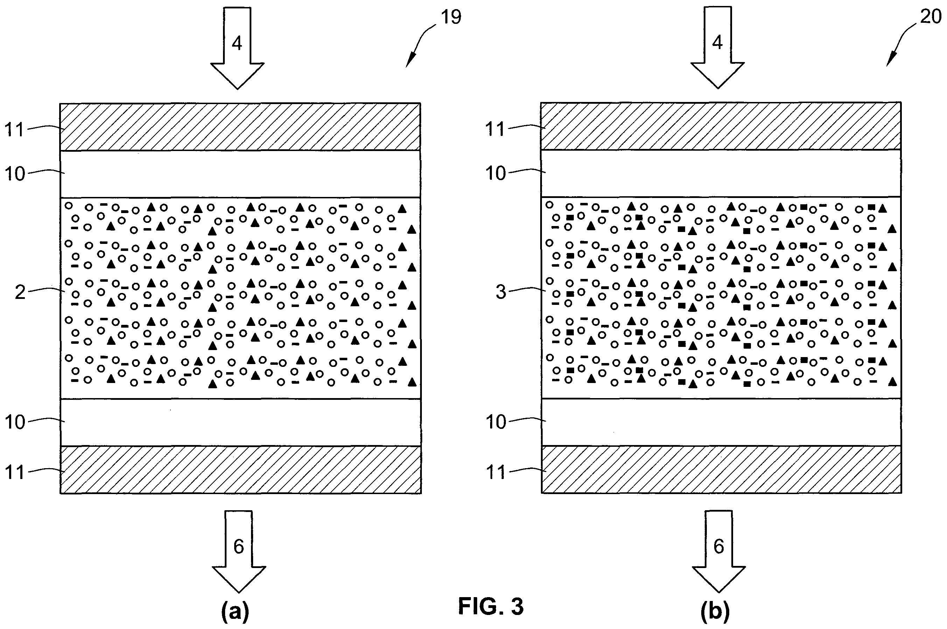

FIG. 3 is a cross-sectional view of two versions of a photochromic and up-conversion optical device with a UV reflector layer 10 and a UV blocker layer 11 on both the entrance and exit sides of a composition 2 or 3.

FIG. 3a depicts a cross-sectional view of a photochromic and up-conversion bulk material 19 material comprising the composition 2 and a UV reflector 10 and a UV blocker 11 on both the entrance and exit sides of the composition 2. The optical element 19 absorbs part of the light beam 4 which impinges on it, the UV part is blocked by layer 11, and the visible and/or near-IR is absorbed by the up-conversion nanoparticles additive 16 inside composition 2, and up-converted to UV light, that when absorbed by photochromic material 14 changes the bulk color and transparency, and effectively transmits only part of the light. When the power of the entering light 4 is reduced, the transparency is resumed, and the exiting light beam 6 is about as intense as the entering light 4. The material 2 changes the bulk color and transparency to the visible light when exposed to near-IR light. At the light entrance 4 and exit 6 The two UV reflector layers 10 are transparent to both visible and near-IR light, serving two purposes: (a) trapping the UV light emitted from the upconverting material, effectively bouncing it back and forth until absorbed, thus enhancing efficiency, and (b) filtering the UV light from the exiting light 6, shielding, e.g., the eye, from UV radiation when the material is used for spectacle lenses. The two UV blocker layers 11, situated on both the entrance and exit sides, also serve two purposes: (a) preventing UV light from entering the device, thus reducing degradation of the photochromic material inside the composition 2, and (b) further filtering the UV light from the exiting light 6, shielding, e.g., the eye from UV radiation when the material is used for spectacle lenses.

FIG. 3b depicts a cross-sectional view of a photochromic up-conversion optical device 20, comprising a composition 3 (as described above in connection with FIG. 1b), and both a UV reflector 10 and a UV blocker 11 on both the entrance and exit sides of the device. The optical element 20 performs in the same way as the element 19 of FIG. 3a, but with the additional fluorescence enhancers 17 in the composition 3 to enhance fluorescence emission from the up-converting nanoparticles additives 16. The enhancement of fluorescence from the up-converting nanoparticles 16 is achieved through plasmonic coupling, also known as hot-spots or local field effect.

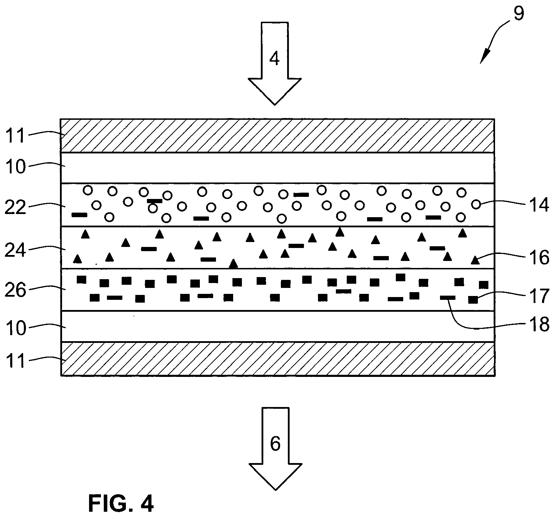

FIG. 4 depicts a cross-sectional view of a photochromic and up-conversion laminated device 9 with both a UV reflector layer 10 and a UV blocker layer 11 on both the entrance and exit sides of the device. Three layers 22, 24 and 26 of different materials are located between the two UV reflector layers 10 to complete the laminated optical device 9. The layer 22 contains photochromic material 14, layer 24 contains up-conversion nanoparticles additive 16, and layer 26 contains fluorescence enhancers 17. All the layers 22, 24, and 26 can further contain environmental stabilizers 18. UV light in a light beam 4 entering the device 19 is either absorbed or reflected by the layers 10 and 11, and the visible and/or near-IR part of the entering light beam 4 is up-converted to UV light by the nanoparticles additive 16. The up-converted UV light is absorbed by the photochromic material 14 in the layer 22, changing the bulk color and transparency, and effectively transmitting only part of the light. When the power of the entering light 4 is reduced, the transparency is resumed, and the exiting light beam 6 is about as intense as the entering light 4. The laminated optical device 9 changes the bulk color and transparency when exposed to near-IR light since only visible and near-IR can penetrate through the UV reflector layer 10. The two UV reflector layers 10 serve two purposes: (a) reflecting the remaining UV not absorbed by the layers 22, 24 and 26, by bouncing it back and forth until absorbed, thus enhancing efficiency, and (b) filtering the UV light from the exiting light 6, shielding, e.g., the eye, from UV radiation when the material is used for spectacle lenses. The two UV blocker layers 11 also serve two purposes: (a) preventing UV light from entering the device, thus reducing the degradation of the photochromic material inside the composition 2, and (b) further filtering UV light from the exiting light 6, shielding, e.g., the eye, from UV radiation when the material is used for spectacle lenses. This configuration can also work without the reflecting layers 10 or the UV blocking layers 11, but with lower efficiency.

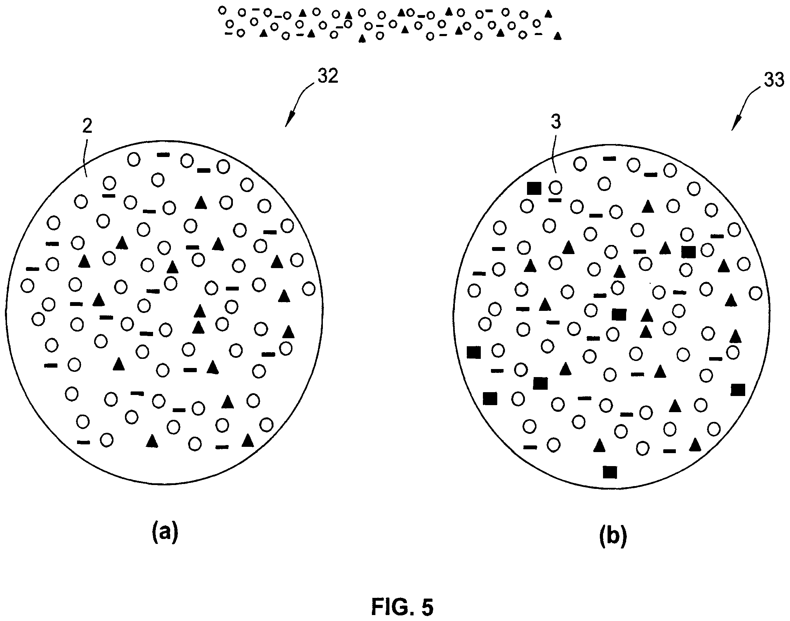

FIG. 5 depicts cross-sectional views of a single photochromic and up-conversion nanoparticle or microparticle 32 or 33. FIG. 5a depicts a cross-sectional view of a single nanoparticle or microparticle 32 comprising the composition 2 as described above in connection with FIG. 1a. Composition 2 comprises a matrix 12, a photochromic material 14, up-conversion nanoparticles additive 16 and environmental stabilizers 18. FIG. 5b depicts a cross-sectional view of a single nanoparticle or microparticle particle 33 comprising the composition 3 as described above in connection with FIG. 1a. Composition 3 comprises a matrix 12, a photochromic material 14, up-conversion nanoparticles additive 16, fluorescence enhancers 17 and environmental stabilizers 18. The particles 32 and 33 can be from a few nanometers to a few micrometers in size, containing both photochromic and up-conversion nano-particles. When light impinges on particle 32 or 33, the UV part of the light is absorbed in the photochromic material 14, and the visible and/or near-IR part of the light is absorbed by the up-conversion nanoparticles additive 16, and up-converted to UV light that, when absorbed by photochromic material 14, changes the bulk color and transparency. When the power of the entering light is switched off, the transparency is resumed. The material in particle 32 or 33 changes the bulk color and transparency when exposed to UV light and/or visible light and/or near-IR light, separately or all together. Particles 32 or 33 can be embedded in any transparent matter, and the bulk performs as a photochromic material.

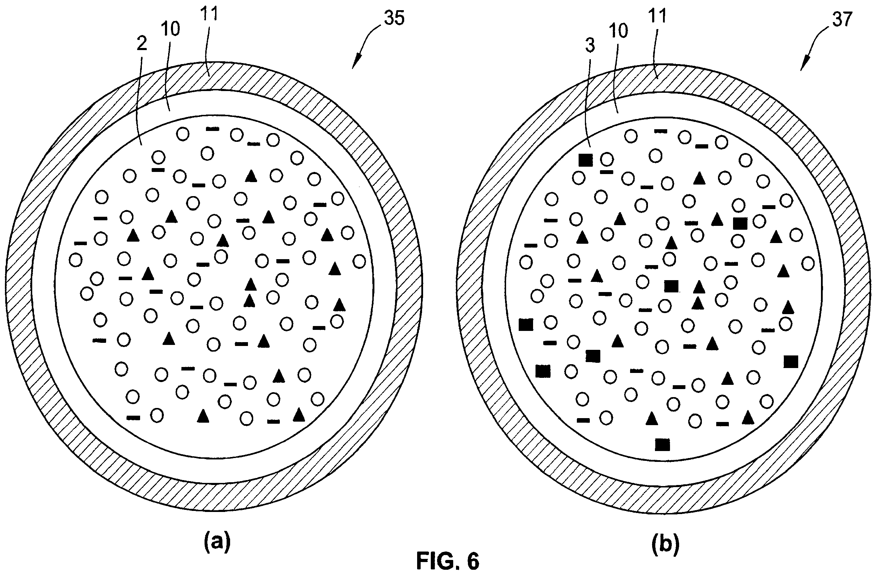

FIG. 6 depicts a cross-sectional view of a single photochromic and up-conversion nanoparticle or microparticle 35 (FIG. 6a) and 37 (FIG. 6b), each coated with a UV reflecting layer 10. The particles 35 and 37 have central portions based on composition 2 (FIG. 6a) or composition 3 (FIG. 6b) as described in FIG.5, an outer UV reflecting layer 10, and an outer UV blocking layer 11. The UV-reflecting layers 10 are transparent in the visible and near-IR range, serving two purposes: (a) reflecting the remaining UV that was not absorbed into composition 2 or 3, by bouncing it back and forth until fully absorbed by the photochromic material in the composition 2 or 3, thus enhancing efficiency and (b) filtering the UV light from the exiting light, shielding, e.g., the eye, from UV radiation when the material is used for spectacle lenses. The UV-blocking layers 11 also serve two purposes: (a) preventing UV light from entering the device, thus reducing degradation of the photochromic material inside composition 2 or 3, and (b) further filtering the UV light from the exiting light 6, shielding, e.g., the eye, from UV radiation when the material is used for spectacle lenses.

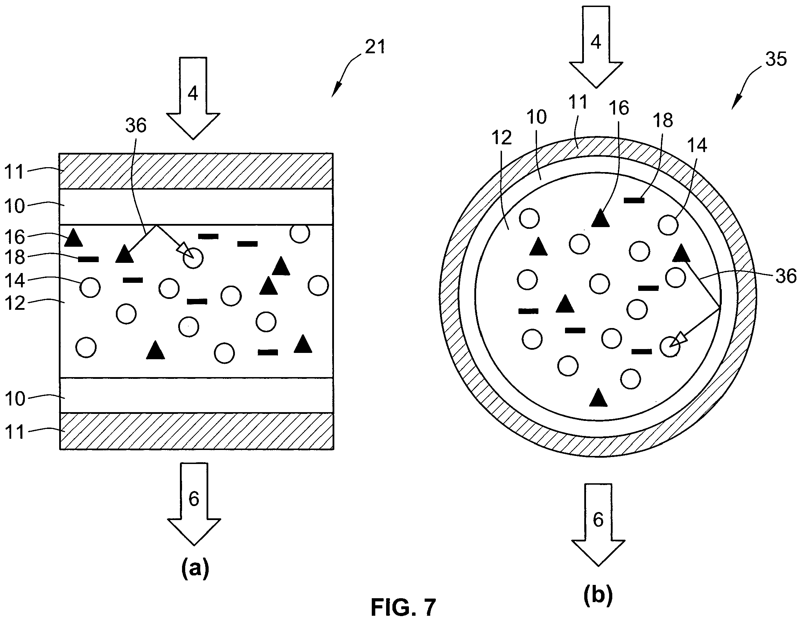

FIG. 7 depicts cross-sectional views of photochromic devices illustrated in FIGs. 3 and 6 and the light path directions inside the devices. FIG.7a shows the device 19 of FIG. 3a receiving the visible and near-IR part of impinging light 4. The up-converted UV emitted from an up-conversion particle 16 is trapped inside the particle by the UV-reflecting layer 10, runs in direction 36 until absorbed by a photochromic particle 14. FIG.7b shows the device 35 of FIG. 6a receiving the visible and near-IR part of impinging light 4. The up-converted UV light emitted from an up-conversion particle 16 is trapped inside the particle by the UV-reflecting layer 34, and runs in direction 36 until absorbed by a photochromic particle 14.

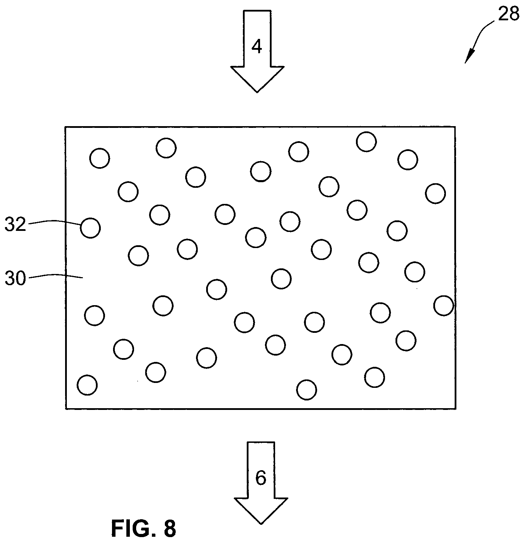

FIG. 8 depicts a cross-sectional view of a bulk element 28 containing photochromic and up-conversion nanoparticles and/or microparticles 32, 33, 35 or 37, described above in connection with FIGs. 5 and 6, dispersed in a matrix 30. The matrix 30 can be any transparent material that can host the photochromic and up-conversion particles, enabling the use of many transparent or film materials that are not efficient for photochromic and up-conversion, e.g., glasses. The optical bulk element 28 absorbs part of the light beam 4 which impinges on it. The UV part of the light beam 4 is absorbed by the photochromic particles, and the visible and/or near-IR part is absorbed by the up-conversion nanoparticles additive and up-converted to UV light that, when absorbed by photochromic material in the nanoparticles and/or microparticles, changes the bulk color and transparency, and thus effectively transmits only part of the light. When the power of the entering light 4 is reduced, the transparency is resumed, and the exiting light beam 6 is about as intense as the entering light 4. The material in 32 changes the bulk color and transparency when exposed to UV light and/or visible light and/or near-IR light, separately, all together, only IR, only visible or visible and IR.

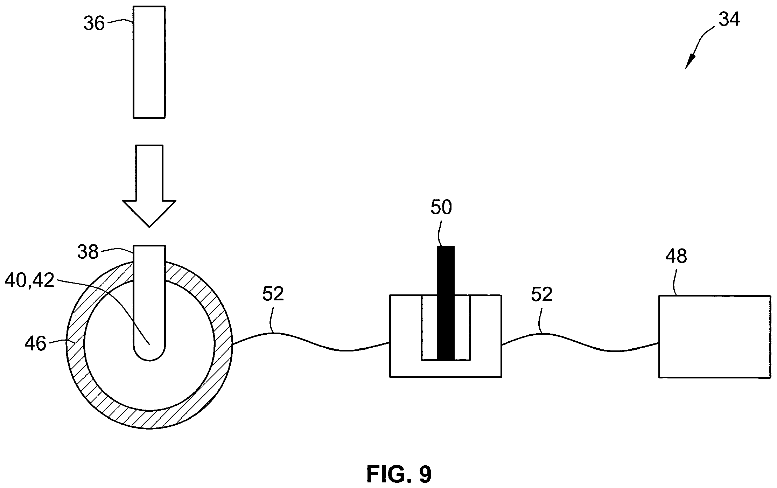

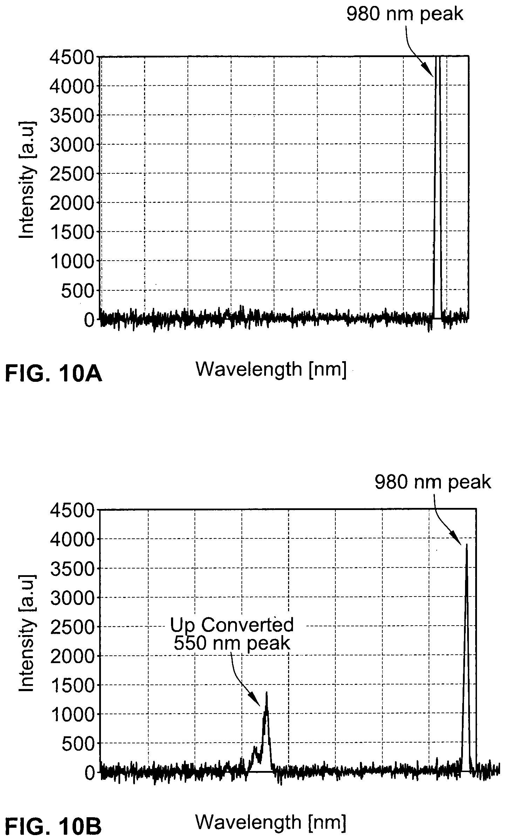

FIG. 9 shows a laboratory test set-up 34 for testing and photochromic and up-conversion particles in bulk volumes. The set up comprises a laser light source 36 having 0.5 Watt of power and wavelength of 980 nm, impinging on a test tube 38 filled with up-converting particles 40 in toluene 42 having concentration of 4 [mg/ml] illuminating the content of the tube 38. The up-converting particles 40 are purchased from *e.g.* Voxtel, Inc. and specified as NP-FAFA-980-AA-L30G5O1 particles designed to absorb in wavelength of 980 nm and through double energy transfer emit in the UV region. The up converted light is collected by integrating sphere 46 e.g. manufactured by OceanOptics, Inc. labeled FOIS-1, and led into optical spectrometer 48 (OceanOptics, Inc. labeled USB4000) through filter 50 (*e.g.* BG 40 filter) used to reduce the intensity of the laser light into the spectrometer 48. The light is transferred through fiber optic 52. The results obtained by the spectrometer 48 are shown in FIG. 10.

FIG. 10 shows experimental results of up-conversion particles in bulk volumes. FIG. 10a shows the light spectrum into the spectrometer when the test tube contains only liquid toluene and FIG. 10b shows the light spectrum into the spectrometer when the test tube contains up-converting particles as described in FIG. 9, in liquid toluene. The results show up-converted light in the 500 nm region of the spectrum, as expected. This part of light (*i.e.*, the up-converted light at roughly 500 nm wavelength) is effective in activating some of the photochromic materials described in this disclosure.

Thus, as described herein, optical devices, such as, for example, lenses, can be prepared to allow for a photochromic response in response to light exposure from light that is typically unable to generate a photochromic response from a photochromic dye material. Typically, photochromic materials exposed to light having an insufficiently low energy level (i.e., wavelengths not low enough), do not actuate. For example, photochromic materials actuated in response to UV or short wave visible light typically remain un-actuated (e.g., transparent) while exposed to near-IR light. However, by incorporating up-converting nano-materials in addition to photochromic dyes, light at relatively low wavelengths that does not, by itself, generate a photochromic response in photochromic materials, is absorbed by the up-converting nano-materials, and light at higher energy levels is re-emitted from the up-converting nano-materials. The re-emitted light has a sufficiently high energy level to actuate a photochromic response from the photochromic dye material. The up-converting nano-materials and/or photochromic dyes can be incorporated in an optical device as a layer applied to an optical device, as a layer of the optical device, or as a bulk material within the optical device, or as some combination of these. Accordingly, photochromic responses are now possible in areas not exposed to significant amounts of UV or short wave visible light. For example, photochromic optical corrective lenses configured to darken in response to UV light can be actuated within an interior of a vehicle having windows coated and/or treated to prevent UV light from entering the passenger portion of the vehicle.

Furthermore, the fluorescent effect of the up-converting nano-materials can be further enhanced by including fluorescence enhancers, and the response time can be decreased, such that the photochromic actuation occurs faster, by including thermal conductivity enhancers.

For exemplary purposes, several examples of combinations used to prepare photochromic materials, such as, for example, optical devices, according to the present disclosure are summarized next. In some embodiments where the prepared material including a matrix, and a photochromic dye and up-converting nanoparticles added to the matrix, the amount of photochromic dye can be selected to be 0.5% to 10% of the weight ("mass") of the matrix; and the amount of the up-converting nanoparticles can be selected to be 0.5% to 10% of the weight of the matrix.

In some embodiments where the prepared material including a matrix, a photochromic dye, up-converting nanoparticles, and fluorescence enhancer materials and/or structures added to the matrix, the amount of photochromic dye can be selected to be 0.5% to 10% of the weight ("mass") of the matrix; the amount of the up-converting nanoparticles can be selected to be 0.5% to 10% of the weight of the matrix; and the amount of the fluorescence enhancer materials and/or structures can be selected to be 0.5% to 5% of the weight of the matrix.

In some embodiments where the prepared material including a matrix, a photochromic dye, up-converting nanoparticles, fluorescence enhancer materials and/or structures, and environmental stabilizers added to the matrix, the amount of photochromic dye can be selected to be 0.5% to 10% of the weight ("mass") of the matrix; the amount of the up-converting nanoparticles can be selected to be 0.5% to 10% of the weight of the matrix; the amount of the fluorescence enhancer materials and/or structures can be selected to be 0.5% to 5% of the weight of the matrix; and the amount of the environmental stabilizers can be selected to be 0.1% to 2-5% of the weight of the matrix, according to the stabilizer.

In some embodiments where the prepared material including a matrix, a photochromic dye, up-converting nanoparticles, fluorescence enhancer materials and/or structures, environmental stabilizers, and thermal conductivity enhancers added to the matrix, the amount of photochromic dye can be selected to be 0.5% to 10% of the weight ("mass") of the matrix; the amount of the up-converting nanoparticles can be selected to be 0.5% to 10% of the weight of the matrix; the amount of the fluorescence enhancer materials and/or structures can be selected to be 0.5% to 5% of the weight of the matrix; the amount of the environmental stabilizers can be selected to be 0.1% to 2-5% of the weight of the matrix, according to the stabilizer; and the amount of the thermal conductivity enhancers can be selected to be from 0.1% to 20% of the weight of the matrix.

As used herein, near infrared ("near-IR") generally refers to radiation in the near infrared spectrum range of the electromagnetic spectrum, *e.g*., radiation having wavelengths between approximately 750 nm to approximately 2500 nm. Visible light generally refers to radiation in the visible range of the electromagnetic spectrum, *e.g*., radiation having wavelengths between approximately 390 nm to approximately 750 nm. Short wave visible light generally refers to radiation within the visible range, or nearly within the visible range, and having wavelengths closer to the smallest wavelengths of the visible range than the longest wavelengths of the visible range, *i.e.*, radiation having wavelengths closer to 390 nm than to 750 nm. Short wave visible light can also refer to radiation that is within the visible range or nearly within the visible range and that has wavelengths below an approximate wavelength defining the range, such as below approximately 500 nm, or below approximately 450 nm, for example. Ultraviolet ("UV") generally refers to radiation in the ultraviolet range of the electromagnetic spectrum, *e.g*., radiation having wavelengths between approximately 10 nm and approximately 400 nm. Generally, both UV light and short wave visible light refers to radiation having a wavelength sufficient to actuate a photochromic material and thereby change the transparency of the photochromic material.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description.

## Claims

1. A photochromic material (2,3) comprising:
a photochromic dye (14) which exhibits a reduction in light transmission responsive to being exposed to ultraviolet light,
up-conversion nanoparticles (16) for absorbing visible light or near infrared light and re- emitting ultraviolet light to be directed to the photochromic dye to reduce the transparency of the photochromic material, and
a matrix material (12) for hosting the up-conversion nanoparticles and the photochromic dye.

2. The photochromic material of claim 1, further comprising fluorescence-enhancing nanoparticles (17) hosted within the matrix material for enhancing the fluorescent emission from the up-conversion nanoparticles.

3. The photochromic material of claim 2, further comprising at least one of environmental stabilizers (18) for regulating radiation induced degradation of the matrix material, and thermal conductivity enhancers for decreasing the thermal response time of the matrix material.

4. The photochromic material of claim 1, wherein the photochromic dye and the up-conversion nanoparticles are dispersed within the matrix material.

5. The photochromic material of claim 1, wherein at least one of the photochromic dye or the up-conversion nanoparticles forms a layer adjacent the matrix material.

6. The photochromic material of claim 1, wherein the up-conversion nanoparticles include at least one nanoparticle selected from LaF₃, NaYF₄, LuPO₄, YbPO₄, GdOF, La₂(MoO₄)₃, YVO₄, ZrO₂, TiO₂, BaTiO₃, Lu₃Ga₅O₁₂, Gd₂O₃ or La₂O₂S and wherein the doping ions include lanthanides selected from Yb, Er, Tm, Eu, Nd or Ho.

7. The photochromic material of claim 1, further comprising fluorescence-enhancing metallic plasmonic nanoparticles hosted within the matrix material for enhancing the fluorescent emission from the up-conversion nanoparticles.

8. The photochromic material of claim 1, further comprising thermal conductivity enhancers for decreasing the thermal response time of the matrix material.

9. The photochromic material of claim 8, wherein the thermal conductivity enhancers include nanoparticles or microparticles and wherein the thermal conductivity enhancers, the up-conversion nanoparticles and the photochromic dye are dispersed within the matrix material, said thermal conductivity enhancers include at least one of a nanoparticle, a nanorod, a nanowire, a hollow nanoparticle, a core-shell nanoparticle, or a spiked nanoparticle composed of metal, metal oxide, metal nitrides, metal carbides, metal sulfides, or carbon-based nanomaterials.

## Patentansprüche

1. Photochromisches Material (2, 3), umfassend
einen photochromischen Farbstoff (14), der infolge Exposition gegenüber ultraviolettem Licht eine Verminderung der Lichtdurchlässigkeit zeigt,
Aufkonvertierungsnanopartikel (16) zur Absorption sichtbaren Lichts oder Naheinfrarotlichts und Reemittierung ultravioletten Lichts, das zur Verringerung der Transparenz des photochromischen Materials zum photochromischen Farbstoff zu leiten ist; und
ein Matrixmaterial (12) zur Einbettung der Aufkonvertierungsnanopartikel und des photochromischen Farbstoffs.

2. Photochromisches Material nach Anspruch 1, ferner umfassend in das Matrixmaterial eingebettete fluoreszenzverbessernde Nanopartikel (17) zur Verbesserung der fluoreszenten Abstrahlung von den Aufkonvertierungsnanopartikeln.

3. Photochromisches Material nach Anspruch 2, ferner umfassend mindestens einen von Umweltstabilisatoren (18) zur Regulierung der strahlungsinduzierten Degradierung des Matrixmaterials und Wärmeleitungsverbesserern zur Herabsetzung der thermischen Ansprechzeit des Matrixmaterials.

4. Photochromisches Material nach Anspruch 1, wobei der photochromische Farbstoff und die Aufkonvertierungsnanopartikel innerhalb des Matrixmaterials dispergiert sind.

5. Photochromisches Material nach Anspruch 1, wobei mindestens eines von dem photochromischen Farbstoff oder den Aufkonvertierungsnanopartikeln eine dem Matrixmaterial benachbarte Schicht bildet.

6. Photochromisches Material nach Anspruch 1, wobei die Aufkonvertierungsnanopartikel mindestens einen Nanopartikel beinhalten, der von LaF₃, NaYF₄, LuPO₄, YbPO₄, GdOF, La₂(MoO₄)₃, YVO₄, ZrO₂, TiO₂, BaTiO₃, Lu₃Ga₅O₁₂, Gd₂O₃ oder La₂O₂S ausgewählt ist, wobei die Dotierungsionen von Yb, Er, Tm, Eu, Nd oder Ho ausgewählte Lanthanoide beinhalten.

7. Photochromisches Material nach Anspruch 1, ferner umfassend fluoreszenzverbessernde metallhaltige, plasmonische Nanopartikel, die zur Verbesserung der fluoreszenten Abstrahlung von den Aufkonvertierungsnanopartikeln innerhalb des Matrixmaterials eingebettet sind.

8. Photochromisches Material nach Anspruch 1, ferner umfassend Wärmeleitungsverbesserer zur Herabsetzung der thermischen Ansprechzeit des Matrixmaterials.

9. Photochromisches Material nach Anspruch 8, wobei die Wärmeleitungsverbesserer Nanopartikel oder Mikropartikel beinhalten und wobei die Wärmeleitungsverbesserer, die Aufkonvertierungsnanopartikel und der photochromische Farbstoff innerhalb des Matrixmaterials dispergiert sind und die Wärmeleitungsverbesserer mindestens einen von einem Nanopartikel, einem Nanostäbchen, einem Nanodraht, einem hohlen Nanopartikel, einem Kern/Schale-Nanopartikel oder einem stacheligen Nanopartikel einer Zusammensetzung aus Metall, Metalloxid, Metallnitriden, Metallkarbiden, Metallsulfiden oder Nanomaterialien auf Kohlenstoffbasis beinhalten.

## Revendications

1. Un matériau photochromique (2,3) comprenant:
un colorant photochromique (14)
qui présente une réduction de la transmission de la lumière en cas d'exposition à la lumière ultraviolette,
nanoparticules de conversion ascendante (16)
pour absorber la lumière visible ou proche infrarouge et réémettre
des rayons ultraviolets qui doivent être dirigés vers le colorant photochromique afin de réduire la transparence de la photochromique
matériel, et
un matériau de matrice (12)
pour héberger les nanoparticules de conversion ascendante et le colorant photochromique.

2. Matériau photochromique selon la revendication 1, comprenant en outre des nanoparticules (17) augmentant la fluorescence
hébergés dans le matériau de matrice pour améliorer l'émission fluorescente des nanoparticules de conversion
ascendante.

3. Matériau photochromique selon la revendication 2, comprenant en outre au moins un stabilisant (18) environmental
pour réguler la dégradation induite par le rayonnement du matériau de la matrice et la conductivité thermique
des activateurs pour réduire le temps de réponse thermique du matériau de matrice.

4. Matériau photochromique selon la revendication 1, dans lequel le colorant photochromique et les nanoparticules de conversion ascendante
sont dispersées dans le matériau de la matrice.

5. Matériau photochromique selon la revendication 1, dans lequel au moins un des colorants photochromiques ou
les nanoparticules de conversion ascendante forment une couche adjacente au matériau de matrice.

6. Matériau photochromique selon la revendication 1, dans lequel les nanoparticules à conversion ascendante comprennent
au moins une nanoparticule sélectionnée parmi LaF₃, NaYF₄, LuP0₄, YbPO₄, GdOF, La₂(MoO₄)₃, YVO₄, ZrO₂, TiO₂, BaTiO₃, Lu₃Ga₅O₁₂, Gd₂O₃ ou La₂O₂S et dans laquelle les ions dopants comprennent des lanthanides sélectionnés parmi Yb, Er, Tm, Eu, Nd ou Ho.

7. Matériau photochromique selon la revendication 1, comprenant en outre des nanoparticules plasmoniques métalliques augmentant la fluorescence
logées dans le matériau de la matrice pour améliorer l'émission de fluorescence des nanoparticules de conversion ascendante.

8. Matériau photochromique selon la revendication 1, comprenant en outre des activateurs de conductivité thermique
pour réduire le temps de réponse thermique du matériau de matrice.

9. Matériau photochromique selon la revendication 8, dans lequel les agents améliorant la conductivité thermique
comprennent des nanoparticules ou des microparticules et dans lequel les agents améliorant la conductivité thermique, les nanoparticules à conversion ascendante et le colorant photochromique sont dispersés dans le matériau de matrice,
les activateurs de conductivité thermique comprennent au moins une nanoparticule, une nanorode, un nanofil, une
nanoparticule creuse, une nanoparticule noyau-enveloppe ou un nanoparticule enrichie composée de métal, oxyde métallique, nitrures métalliques, carbures métalliques, sulfures métalliques ou nanomatériaux à base de carbone.
